(19) Europäisches Patentamt
European Patent Office
Office européen des brevets

(11) **EP 2 414 699 B1**

(12) **EUROPÄISCHE PATENTSCHRIFT**

(45) Veröffentlichungstag und Bekanntmachung des Hinweises auf die Patenterteilung:
**15.05.2013 Patentblatt 2013/20**

(21) Anmeldenummer: **10710557.9**

(22) Anmeldetag: **24.03.2010**

(51) Int Cl.:
*F16D 65/853* (2006.01)    *F16D 65/12* (2006.01)
*F16D 65/78* (2006.01)

(86) Internationale Anmeldenummer:
**PCT/EP2010/001839**

(87) Internationale Veröffentlichungsnummer:
**WO 2010/112164 (07.10.2010 Gazette 2010/40)**

(54) **NASSLAUFENDE LAMELLENBREMSE**

WET-RUNNING DISK BRAKE

FREIN À DISQUES MULTIPLES FONCTIONNANT DANS UN BAIN DE FLUIDE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **02.04.2009 DE 102009015937**

(43) Veröffentlichungstag der Anmeldung:
**08.02.2012 Patentblatt 2012/06**

(73) Patentinhaber: **KNORR-BREMSE Systeme für Nutzfahrzeuge GmbH**
**80809 München (DE)**

(72) Erfinder:
• **BAUMGARTNER, Johann**
 **85368 Moosburg (DE)**

• **PERICEVIC, Aleksandar**
 **80636 München (DE)**
• **GEISSLER, Steffen**
 **63110 Rodgau (DE)**

(74) Vertreter: **Mattusch, Gundula**
**C/o Knorr-Bremse AG**
**Moosacherstrasse 80**
**80809 München (DE)**

(56) Entgegenhaltungen:
**EP-A1- 0 307 079    EP-A1- 0 308 048**
**DE-A1- 2 331 315    US-A- 4 721 191**

**Beschreibung**

Die Erfindung betrifft eine nasslaufende Lamellenbremse nach dem Oberbegriff des Anspruchs 1.

Nasslaufende Lamellenbremsen, wie sie beispielsweise in Spezial-Lkws, ebenso wie in schweren Baumaschinen, Traktoren und dergleichen zum Einsatz kommen, sind sehr verschleißarm und werden auf einem niedrigen Temperaturniveau betrieben. Dabei wird die entstehende Bremswärme und ein Bremsbelagabrieb mit Kühlöl abgeführt.

Üblicherweise sind die nasslaufenden Lamellenbremsen mit einem Achsgetriebe zusammengefasst, so dass das Öl des Achsgetriebes auch zum Betrieb der Lamellenbremse als Kühlfluid verwandt wird, wobei das Öl durch eine Radnabe geführt und zwischen den Reibflächen der Stator-Lamellen und der Rotor-Lamellen durch deren Rotation nach außen transportiert wird. Diese intensive Art der Kühlung ermöglicht über eine Bemessung des Kühlölstromes eine definierte Wärmeabfuhr.

Allerdings ist diese bekannte nasslaufende Lamellenbremse mit einer Reihe von Nachteilen behaftet.

Bei den genannten Spezial-Lkws, schweren Baumaschinen oder schweren Traktoren führt eine hohe Dauerbelastung der Bremsen durch die anfallende Bremswärme zu einer Überhitzung des Getriebeöls, da die Wärme nicht mehr vollständig über die Oberfläche des Getriebegehäuses an die Umgebung abgeführt werden kann.

Dies hat den Verlust der Schmierfähigkeit des Öles zur Folge, was zu Schäden an den Getriebekomponenten führen kann.

Da das Kühlöl zur Schmierung von Getriebezahnrädern eingesetzt wird, weist es funktionsbedingt eine relativ hohe Zähigkeit auf. Dies führt bei freier Fahrt in den Lüftspalten zwischen den Rotor-Lamellen und den fest stehenden Stator-Lamellen zu hohen Schleppverlusten und damit zu einer zusätzlichen Aufheizung des Öls. Aus diesem Grund ist der Einsatz von nasslaufenden Lamellenbremsen bislang auf langsam laufende Fahrzeuge beschränkt.

Ein weiterer gravierender Nachteil der bekannten Lamellenbremse ergibt sich daraus, dass die Bremswärme durch den Kühlölstrom nur über die Reibflächen geführt werden kann, wobei das Öl während der Bremsung in Reibflächennuten geführt wird. Damit sind der Kühlölstrom und in der Folge die mögliche Wärmeabfuhr begrenzt.

Auch nach einem Lösen der Bremse ergeben sich aufgrund sehr engen Lüftspalte von 0,1 bis 0,15 mm nur geringe Durchflussquerschnitte. Es ist daher für eine ausreichende Wärmeabfuhr erforderlich, durch eine ausreichende Anzahl von Reibkontakten die Energiedichte darin niedrig zu halten.

Allerdings erhöht eine große Anzahl von Reibflächen und Reiblamellen die Schleppleistungsverluste der Bremse, was, wie erwähnt, zu einer Aufheizung des Öls führt.

Darüber hinaus ist das Gesamtlüftspiel abhängig von der Anzahl der Reibflächen bzw. Reiblamellen, aus der sich bei einer entsprechend großen Anzahl ein großer Betätigungsleerweg der Bremse ergibt. Ein akzeptabler Betätigungsleerweg ist nur dadurch erreichbar, dass der Abstand der Reibflächen von Rotor- und Statorlamellen im nicht betätigten Zustand der Bremse sehr klein gehalten wird, wodurch allerdings bei freier Fahrt Verschleiß- und Geräuschprobleme auftreten.

In der EP 0 308 048 A1 sowie der EP 0 307 079 A1 ist jeweils eine nasslaufende Lamellenbremse geoffenbart, bei der zur Reibflächenkühlung die beidseitigen Reibflächen der Rotorlamellen mit offenen Nuten versehen sind, die durch durchgängige, in einen Kühlmittelsumpf mündende Ausnehmungen gespeist werden.

Der Erfindung liegt die Aufgabe zugrunde, eine Lamellenbremse der gattungsgemäßen Art so weiterzuentwickeln, dass die Kühlung, d.h. die Bremswärmeabfuhr wesentlich verbessert wird.

Diese Aufgabe wird durch eine Lamellenbremse mit den Merkmalen des Anspruchs 1 gelöst.

Zur Verbesserung der Kühlung ist zunächst einmal die Zahl der notwendigen Reibkontakte, d.h. die Anzahl der reibenden Anlagen zwischen den Rotorlamellen und den Statorlamellen zu bestimmen und zwar aus dem gewünschten und dem erzielbaren Bremsmoment pro Rotorlamelle. Dies ist beispielhaft wie folgt bestimmbar:

| | |
|---|---|
| Verfügbare Spannkraft | $F_N = 180$ kN |
| Erzielbarer Reibwert | $\mu = 0{,}125$ |
| Effektiver Reibradius | $r_{eff} = 0{,}18$ m |
| Gewünschtes Bremsmoment | $M_B = 24$ kNm |

Mit diesen Angaben ergibt sich unter der Voraussetzung einer ausreichenden Kühlung die Anzahl der benötigten Reibkontakte:

$$\text{Bremsmoment pro Reibkontakt} \qquad M_S = F_N \cdot \mu \cdot r_{eff} = 4{,}05 \text{ kNm}$$

$$\text{Anzahl der Reibkontakte} \qquad n = \frac{M_B}{M_S} \approx 5{,}93 \Rightarrow n = 6$$

Weiter ist die notwendige Masse und das geeignete Material der Rotorlamellen aus dem maximal möglichen Energieeeintrag pro Bremsung und der maximal zulässigen Rotortemperatur zu bestimmen.

Dabei wird die Masse der Rotorlamellen so gewählt, dass bei einem Bremsvorgang mit maximal möglichem Energieeeintrag eine vorgegebene obere Scheibengrenztemperatur nicht überschritten wird. Es wird dabei davon ausgegangen, dass die gesamte Energie nur von den Rotorlamellen aufgenommen wird, da die Statorlamellen üblicherweise zur Erzielung eines geeigneten Reibverhaltens mit einer Beschichtung aus organischem Reibmaterial versehen sind, wodurch nur eine geringe Wärmeaufnahme erfolgt, d.h. die Statorlamelle weist eine niedrige Wärmeleitfähigkeit auf.

Beispielhaft sei im Folgenden die Masse und das Material der Rotorlamellen dargestellt:

Zugrunde gelegter Bremsfall: Hitzerisstest mit 5 MJ Bremsenergie bei 40 Sekunden Bremsdauer.

Geht man davon aus, dass die Wärmeabfuhr an das Kühlfluid während der Bremsdauer 2 MJ und beträgt und die Anfangs- und Endtemperatur wie folgt festgelegt sind, so ergibt sich für die Rotorlamellen:

| | |
|---|---|
| Wärmeeintrag Rotorscheiben | $Q_s$ = 3 MJ |
| Mittlere Massentemp. am Anfang | $V_a$ = 90°C |
| Mittlere Massentemp. am Ende | $V_e$ = 250°C |
| Temperaturerhöhung Scheiben | $\Delta\vartheta$ = 160K |

Um den Wärmeeintrag in die Scheiben unter diesen Randbedingungen gewährleisten zu können, muss eine Mindest-Wärmekapazität vorliegen:

$$\text{Wärmekapazität:} \qquad C = \frac{Q_s}{\Delta\vartheta} = 18{,}75\,\frac{kJ}{K}$$

Je nach Material der Scheiben ergibt sich abhängig von der spezifischen Wärmekapazität c eine nötige Gesamtmasse m:

$$m = \frac{C}{c}$$

| Werkstoff | $c\left[\dfrac{kJ}{kg \cdot K}\right]$ | m [kg] |
|---|---|---|
| Aluminiumlegierung | 0,94 | 19,95 |
| Gusseisen | 0,50 | 37,50 |
| Stahl | 0,43 | 43,60 |

Bei dem bei einer Bremsung vorherrschenden niedrigen Temperaturniveau von maximal 250°C ist eine solche Aluminiumlegierung in nasslaufenden Lamellenbremsen problemlos einsetzbar.

Zur Verbesserung des Verschleißverhaltens empfiehlt es sich, verschleißfeste Aluminiumlegierungen einzusetzen, wie sie bereits aus dem Motorenbau bekannt sind und sich dort bewährt haben. Alternativ können die Reibflächen auch mit verschleißmindernden Beschichtungen versehen werden, z.B. mit Titankarbid-Beschichtungen.

Neben dem erheblich verringerten Gewicht stellt sich als weiterer Vorteil eine verbesserte Wärmeabfuhr der Aluminiumlegierung aufgrund seiner hohen Wärmeleitfähgkeit dar.

Bei dem gezeigten Beispiel kann davon ausgegangen werden, dass sich die Oberflächentemperatur der Rotorlamelle nur wenig von der mittleren Massentemperatur unterscheidet.

Da die Wärmeleitfähigkeit von Gusseisen bzw. Stahlwerkstoffen im Vergleich zu Aluminium nur bei ca. 15 bis 30 % liegt, ergibt sich eine Oberflächentemperatur vor allem bei großen Wandstärken und hohem Wärmeeintrag deutlich über der mittleren Massentemperatur. Dieser Effekt ist nicht wünschenswert, da damit auch die Schmieröltemperatur, bei Verwendung eines Kühlöls, im Spalt zwischen der Rotorlamelle und der Statorlamelle ansteigt und es zu Schädigungen kommen kann.

Gemäß dem Anspruch 1 sind die Rotorlamellen als Hohlkörper ausgebildet, die unmittelbar vor oder zu Beginn einer Bremsung mit Kühlfluid füllbar sind, das aus jeder geeigneten Kühlflüssigkeit bestehen kann, neben dem genannten Kühlöl z.B. auch aus Glycol-/, Glycerin-Wasser Gemischen o.dgl. Zusätzlich zu dieser sozusagen Innenkühlung kann eine durch Nuten erzeugte Reibflächenkühlung, wie sie bisher bereits eingesetzt wird, vorgesehen sein.

Zur Innenkühlung wird das durch die Radnabe, an der die Statorlamellen befestigt sind, zugeführte bspw. Kühlöl in den zwischen den beiden Reibflächen der Statorlamelle befindlichen, einen Kühlkanal bildenden Hohlraum eingespritzt und durch die Rotation der Rotorlamelle nach außen geschleudert.

Der Austritt des Kühlöls am äußeren Umfangsrand wird bevorzugt durch Ausströmdüsen begrenzt, deren Querschnitte so bemessen sind, dass für vorgegebene Drehzahlen eine vorgegebene Durchflussmenge des Kühlöls durch den Kühlkanal erzielt wird.

Auf diese Weise wird eine optimale Aufteilung des Gesamt-Kühlöl-Stromes auf die Reibflächenkühlung und die Rotor-Innenkühlung erreicht. Da die Bemessung der Querschnitte der Ausströmdüsen in weiten Grenzen frei wählbar ist, gibt es für die Kühlkapazität der Rotor-Innenkühlung keine enge Begrenzung, wie dies bei einer ausschließlichen Reibflächenkühlung der Fall ist.

Durch die derartige Ausbildung der Bremse wird die Wärmekapazität der Rotorlamellen herabgesetzt, so dass sich im Fahrbetrieb, in dem die Rotorlamellen nicht mit Kühlöl befüllt sind, eine niedrige Masse ergibt.

Eine Optimierung der Bremse wird dann erreicht, wenn die innen kühlbaren Rotor-lamellen aus der beschriebenen Aluminiumlegierung bestehen. Denkbar ist aber auch die Rotorlamellen als dünnwandige Gusseisen- oder Stahlkonstruktionen auszubilden.

Eine vorteilhafte Weiterbildung der Erfindung ist dadurch erreicht, dass die Lamellenbremse steuerungstechnisch mit einem Bremsassistenten gekoppelt ist, so dass durch beispielsweise Abstandsmessung zu einem vorausfahrenden Fahrzeug oder einer Erkennung der Fahrerreaktion, beispielsweise einer entsprechenden Fußbewegung, eine Kühlölförderung eingeleitet wird. Dann nämlich steht die volle Wärmekapazität von Beginn der Bremsung an zur Verfügung.

Beispielhaft seien nachfolgend Verhältnisse dargestellt, wie sie sich ergeben, wenn sich das Kühlöl in den Hohlräumen der Rotorlamellen befindet, ohne austreten zu können. Es ergibt sich bei dem bereits beschriebenen Hitzerisstest bei einer Öl- und Rotorenerwärmung auf 250°C:

Gesamtwärmekapazität (siehe oben)

$$C = 18{,}75\,\frac{kJ}{K}$$

Reduzierte Masse Aluminiumrotoren $\qquad m_R = 10\,kg$

Spezifische Wärmekapazität Rotoren

$$C_R = 0{,}94\,\frac{kJ}{kg \cdot K}$$

Wärmekapazität Rotoren

$$C_R = m_R \cdot C_R = 9{,}4\,\frac{kJ}{K}$$

Benötigte Wärmekapazität "Ölfüllung"

$$C_{Öl} = C - C_R = 9{,}35\,\frac{kJ}{K}$$

Spezifische Wärmekapazität Öl

$$c_{Öl} = 2{,}62\,\frac{kJ}{kg \cdot K}$$

$$(\vartheta_m = 170°C)$$

Ölmasse

$$m_{Öl} = \frac{C_{Öl}}{c_{Öl}} = 3{,}57\,kg$$

Daraus ergibt sich ein Gewichtsvorteil unter der Annahme eines ausreichenden Wärmeübergangskoeffizienten von der Rotorlamelle auf das Kühlöl:

$$\rho_{Al} = 2{,}7\,\frac{kg}{dm^3}\,;$$

$$\rho_{\ddot{O}l} = 0{,}82\,\frac{kg}{dm^3}\left(\overline{\vartheta}_m = 170°C\right)$$

|  | Einheit | Ohne Ölfüllung | Mit Ölfüllung |
|---|---|---|---|
| Masse Rotoren | [kg] | 19,95 | 10,00 |
| Volumen Rotoren | [dm³] | 7,39 | 3,70 |
| Masse Öl | [kg] | 0,00 | 3,57 |
| Volumen Öl | [dm³] | 0,00 | 4,35 |
| **Masse Gesamt** | [kg] | **19,95** | **13,57** |
| **Volumen Gesamt** | [dm³] | **7,39** | **8,05** |

Das Gewicht während der Bremsung wurde in diesem Beispiel um ca. 32 % reduziert. Bei nicht betätigter Bremse, bei der sich kein Ölvolumen in den Rotor-Hohlräumen bzw. Kühlkanälen befindet, ergibt sich sogar eine Gewichtsreduzierung um ca. 50 %. Aufgrund des vergleichbaren Wertes von c · p des Öls, bezogen auf Aluminium in Legierungen, erfolgt diese Gewichtsreduzierung bei lediglich 9 % Zunahme des benötigten Volumens.

Geht man von der obigen Berechnung aus und lässt einen Durchfluss aus den Austrittsdüsen zu, so wird das Gewicht der Rotorlamellen nochmals reduziert.

Bei einem Volumenstrom von 2,1 Litern pro 40 Sekunden (3,225 Liter/Minute) wird das halbe Ölvolumen in den Rotorlamellen während einer Bremsung einmal vollständig getauscht. Damit kann dem Öl eine ca. 50 % höhere Wärmekapazität zugeschrieben werden, vorausgesetzt, dass der Wärmeübergang zum Öl ausreichend ist. Alternativ kann die Ölaustrittstemperatur durch einen Ölaustausch herabgesetzt werden. Hierzu kann beispielsweise ein von anderen Fahrzeugaggregaten unabhängiges Kühlsystem Verwendung finden, beispielsweise ein Öl-Luft-Wärmetauscher, mit dem die Wärme direkt an die Umgebungsluft abgegeben wird, oder einen Öl-Wasser-Wärmetauscher, der mit dem Kühlwasser der Motorkühlung gekühlt wird.

Der eine oder mehrere Bremsen einbindende Kühlkreislauf ist von Achsgetriebekomponenten unabhängig und erlaubt somit die Verwendung eines Kühlöles, das ausschließlich auf die Erfordernisse der Bremse abgestimmt ist. Die Anforderungen an die Schmiereigenschaften sind dabei vergleichsweise gering, so dass die Auswahl des Öles in der Hauptsache bestimmt wird von Anforderungen nach einer maximalen Wärmeabfuhr und geringstmöglicher Verlustleistung.

Weitere vorteilhafte Ausbildungen der Erfindung sind in den Unteransprüchen gekennzeichnet.

Es zeigen:

Figur 1 einen Teilausschnitt einer erfindungsgemäßen Lamellenbremse in einem Längsschnitt

Figur 2 einen weiteren Teilausschnitt der Lamellenbremse in einer abweichenden Ebene

Figur 3 eine Einzelheit der Lamellenbremse in einer geschnittenen Draufsicht

Figur 4 einen Schnitt durch die Einzelheit entsprechend der Linie IV-IV in der Figur 3

Figur 5 einen Kühlkreislauf zum Betrieb der Lamellenbremse in einer schematischen Darstellung.

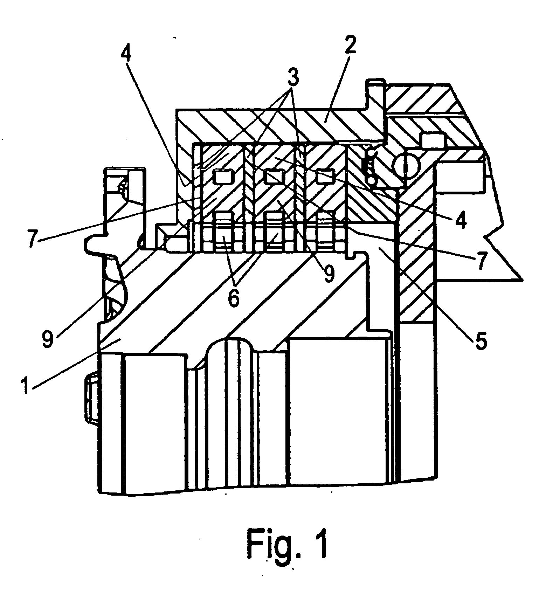

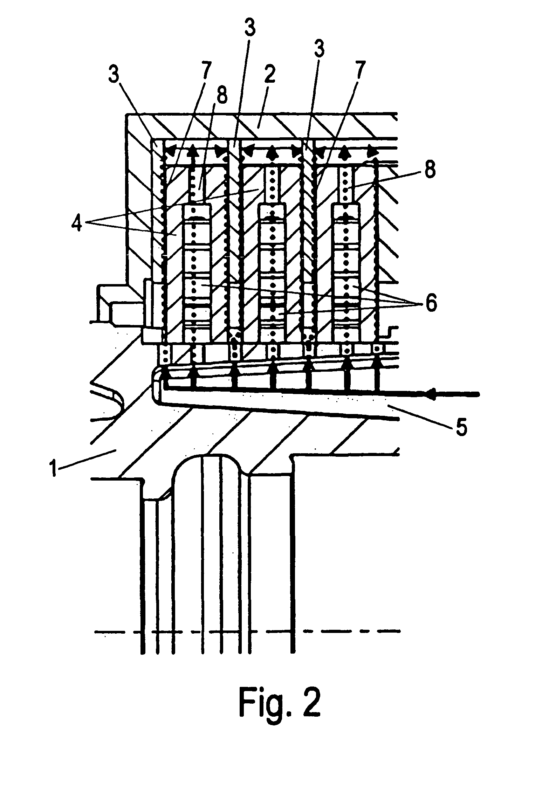

In den Figuren 1 und 2 ist ein Teil einer mittels Kühlöl nasslaufenden Lamellenbremse, insbesondere für ein Straßenfahrzeug, dargestellt, wobei in der Figur 2 die punktieren Linien gemeinsamen mit den Pfeilangaben die Strömung des Kühlöles wiedergibt.

Die Lamellenbremse weist parallel und abständig zueinander angeordnete, an einem fest stehenden Gehäuse verdrehsicher gehaltene Stator-Lamellen 3 auf, zwischen denen jeweils eine drehbare Rotorlamelle 4 angeordnet ist, die an einer Nabe 1 des Fahrzeuges befestigt sind.

Bei einer Bremsung sind die sich radial erstreckenden Statorlamellen 3 und die Rotorlamellen 4 gegeneinander pressbar, unter Überwindung eines Lüftspiels 7, das sich nach einem Lösen der Bremse, bei dem die Stator- und Rotorlamellen voneinander getrennt werden, wieder bildet.

Erfindungsgemäß sind die Rotorlamellen 4 als Hohlkörper ausgebildet, die unmittelbar vor oder zu Beginn einer Bremsung mit Kühlöl füllbar sind.

Hierzu weist die jeweilige Rotorlamelle 4 radial sich erstreckende Kühlkanäle 6 auf, die am Außenumfang durch eine Wandung begrenzt werden, in der Ausströmdüsen 8 radial sich erstreckend vorgesehen sind.

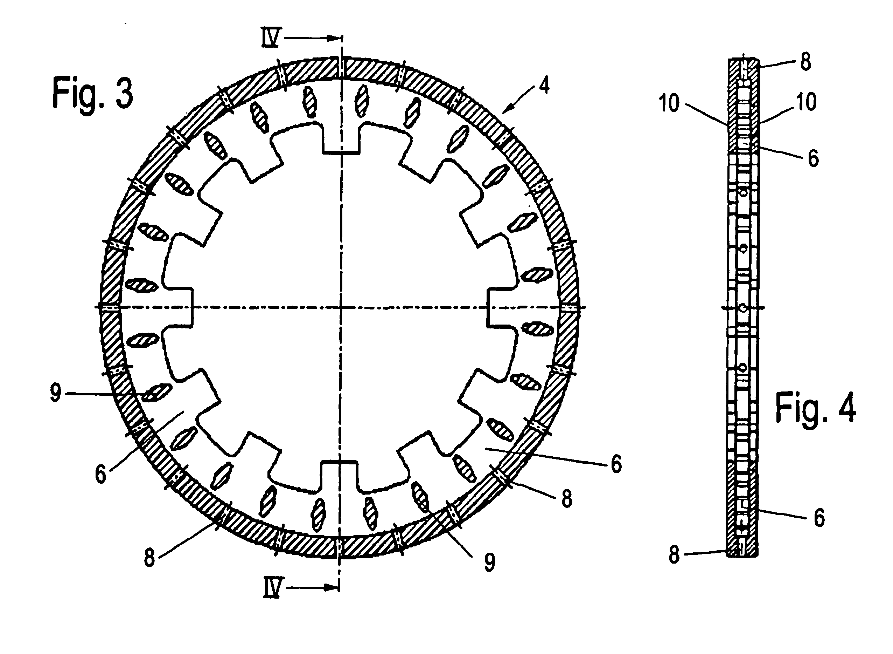

Wie insbesondere die Figuren 3 und 4 sehr deutlich wiedergeben, sind zwischen zwei die Kühlkanäle 6 seitlich begrenzenden Reibgurten 10 Verbindungsstege 9 vorgesehen, die durch ihre Gestaltung eine radiale Förderwirkung auf das Kühlöl ausüben und gleichzeitig einen Wärmeübergang intensivieren, d.h., sie wirken als Wärmetauscherflächen.

In der Figur 2 ist die Lamellenbremse 12 in Funktion dargestellt, in der die Stator-lamellen 3 reibend an den Rotorlamellen 4 anliegen.

Über eine Zuführung 5 in der Nabe 1 wird das Kühlöl in die Kühlkanäle 6 geführt, ebenso wie in Nuten der die Außenseiten der Reibgurte 10 bildenden Reibflächen der Rotorlamellen 4 und/oder der Statorlamellen 3, wobei der Öldurchfluss als punktierte Linie dargestellt ist.

Das Kühlöl tritt durch die Rotation der Rotorenlamellen 4 aus den Austrittsdüsen 8 aus, unter Mitnahme der aufgenommenen, von den Reibgurten 10 abgegebenen Wärme.

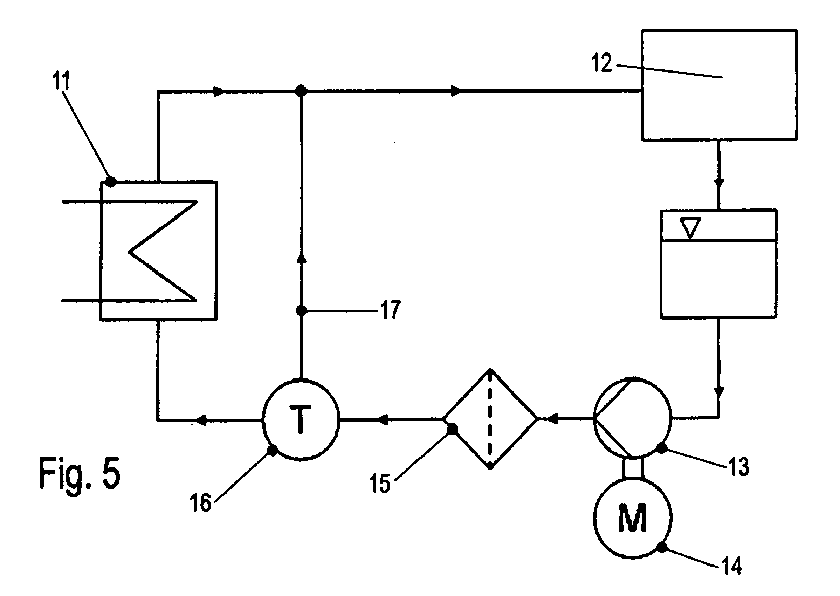

Wie in der Figur 5 dargestellt, kann ein Wärmetausch des Kühlöles in einem separaten Kühlkreislauf erfolgen.

Hierzu ist ein Wärmetauscher 11 vorgesehen, beispielsweise ein Öl-Luft- oder Öl-Wasser-Wärmetauscher, wobei letzterer an die Motorkühlung angeschlossen sein kann.

Der Kühlkreislauf ist mit einer regelbaren Pumpe 13, die über einen elektrischen oder mechanischen Antrieb 14 betreibbar ist, ausgestattet sowie einem Partikelfilter 15 zur Ausfilterung von beim Bremsen entstehendem Abrieb. Statt einer mechanisch angetriebenen Pumpe 13 kann eine Regelung des Volumenstroms auch über entsprechende Ventilschaltungen erfolgen.

Weiter ist eine separate Regelung des Kühler-Volumenstroms durch eine Thermostatbeschaltung 16 vorgesehen, mit einer Bypass-Strecke 17, parallel zum Wärmetauscher 11.

**Patentansprüche**

**1.** Mittels eines Kühlfluids nasslaufende Lamellenbremse, insbesondere für ein Straßenfahrzeug, mit parallel und abständig zueinander angeordneten, fest stehenden Statorlamellen (3), zwischen denen jeweils eine drehbare Rotorlamelle (4) angeordnet ist, wobei bei einer Bremsung die sich radial erstreckenden Statorlamellen (3) und Rotorlamellen (4) unter Überwindung eines Lüftspiels (7) gegeneinander pressbar und nach einem Lösen der Bremse unter Bildung des Lüftspiels voneinander trennbar sind, **dadurch gekennzeichnet, dass** die Rotorlamellen (4) als Hohlkörper ausgebildet sind und Kühlkanäle (6) aufweisen, die unmittelbar vor oder zu Beginn einer Bremsung mit Kühlfluid befüllt werden.

**2.** Lamellenbremse nach Anspruch 1, **dadurch gekennzeichnet, dass** von den Kühlkanälen (6) zum Außenumfang hin gerichtete Austrittsdüsen (8) vorgesehen sind.

**3.** Lamellenbremse nach Anspruch 1 oder 2, **dadurch gekennzeichnet, dass** die Ausströmdüsen (8) in ihrem Querschnitt abhängig von einer vorgegebenen Drehzahl der Rotorlamellen (4) und einer vorgegebenen Durchflussmenge des Kühlfluids dimensioniert sind.

**4.** Lamellenbremse nach einem der vorhergehenden Ansprüche, **dadurch gekennzeichnet, dass** die Rotorlamellen (4) aus einer Aluminiumlegierung bestehen.

**5.** Lamellenbremse nach einem der vorhergehenden Ansprüche, **dadurch gekennzeichnet, dass** Reibflächen bildende Reibgurte (10) der Rotorlamellen (4) mit verschleißmindernden Beschichtungen versehen sind.

**6.** Lamellenbremse nach einem der vorhergehenden Ansprüche, **dadurch gekennzeichnet, dass** den Kühlkanälen (6) Verbindungsstege (9) zugeordnet sind, mit denen die Reibgurte (10) verbunden sind.

**7.** Lamellenbremse nach einem der vorhergehenden Ansprüche, **dadurch gekennzeichnet, dass** die Lamellenbremse mit einem Bremsassistenten in Wirkverbindung steht.

8. Lamellenbremse nach einem der vorhergehenden Ansprüche, **dadurch gekennzeichnet, dass** das Kühlfluid durch einen separaten Kühlkreislauf geführt ist.

9. Lamellenbremse nach Anspruch 8, **dadurch gekennzeichnet, dass** der Kühlkreislauf einen Fluid-Luft- oder Fluid-Wasser-Wärmetauscher (11) aufweist.

10. Lamellenbremse nach Anspruch 9, **dadurch gekennzeichnet, dass** der Fluid-Wasser-Wärmetauscher (11) mit der Motorkühlung verbunden ist.

11. Lamellenbremse nach einem der Ansprüche 8 bis 10, **dadurch gekennzeichnet, dass** der Kühlkreislauf eine regelbare Pumpe 13 aufweist.

12. Lamellenbremse nach einem der Ansprüche 8 bis 11, **dadurch gekennzeichnet, dass** der Kühlkreislauf einen Partikelfilter (15) aufweist.

13. Lamellenbremse nach einem der Ansprüche 8 bis 12, **dadurch gekennzeichnet, dass** zur Regelung des Volumenstroms des Kühlkreislaufes Ventilschaltungen vorgesehen sind.

14. Lamellenbremse nach einem der Ansprüche 8 bis 13, **dadurch gekennzeichnet, dass** der Kühlkreislauf eine Thermostatbeschaltung (16) aufweist.

## Claims

1. Multi-disc brake which is wet-running by means of a cooling fluid, in particular for a road vehicle, having stationary stator discs (3) which are arranged parallel to one another and at a distance from one another, and between which in each case one rotatable rotor disc (4) is arranged, it being possible, in the case of a braking operation, for the radially extending stator discs (3) and rotor discs (4) to be pressed against one another, with an air gap (7) being overcome, and to be separated from one another after the brake is released, with the formation of the air gap, **characterised in that** the rotor discs (4) are designed as hollow bodies and have cooling channels (6) which are filled with cooling fluid immediately before or at the beginning of a braking operation.

2. Multi-disc brake according to claim 1, **characterised in that** outlet nozzles (8) are provided which are directed from the cooling channels (6) toward the outer circumference.

3. Multi-disc brake according to claim 1 or 2, **characterised in that** the outlet nozzles (8) have their cross section dimensioned as a function of a predefined rotational speed of the rotor discs (4) and a predefined flow volume of the cooling fluid.

4. Multi-disc brake according to any of the preceding claims, **characterised in that** the rotor discs (4) are composed of an aluminum alloy.

5. Multi-disc brake according to any of the preceding claims, **characterised in that** friction belts (10), which form friction faces, of the rotor discs (4) are provided with wear-reducing coatings.

6. Multi-disc brake according to any of the preceding claims, **characterised in that** the cooling channels (6) are assigned connecting webs (9), to which the friction belts (10) are connected.

7. Multi-disc brake according to any of the preceding claims, **characterised in that** the multi-disc brake is operatively connected to a brake assist system.

8. Multi-disc brake according to any of the preceding claims, **characterised in that** the cooling fluid is routed through a separate cooling circuit.

9. Multi-disc brake according to claim 8, **characterised in that** the cooling circuit has a fluid/air or fluid/water heat exchanger (11).

**10.** Multi-disc brake according to claim 9, **characterised in that** the fluid/water heat exchanger (11) is connected to the engine cooling system.

**11.** Multi-disc brake according to any of claims 8 to 10, **characterised in that** the cooling circuit has a controllable pump (13).

**12.** Multi-disc brake according to any of claims 8 to 11, **characterised in that** the cooling circuit has a particulate filter (15).

**13.** Multi-disc brake according to any of claims 8 to 12, **characterised in that** valve circuits are provided for regulating the volumetric flow of the cooling circuit.

**14.** Multi-disc brake according to any of claims 8 to 13, **characterised in that** the cooling circuit has a thermostat circuit (16).

## Revendications

**1.** Frein à disques multiples, fonctionnant dans un bain de fluide réfrigérant, en particulier pour un véhicule routier, à lamelles de stator stationnaires € disposées en parallèles à un écart l'une de l'autre, entre lesquelles une lamelle de rotor rotative respective (4) est disposée, dans lequel lesdites lamelles de stator (3), qui s'étendent en sens radial, et lesdites lamelles de rotor (4) sont pressables l'une contre l'autre au cas d'une opération de freinage, en surmontant un jeu d'aération (7), et sont détachables, l'une de l'autre, après le desserrage du frein, en formant un jeu d'aération, **caractérisé en ce que** lesdites lamelles de rotor (4) sont formées en tant que corps creux et présentent des fentes de refroidissement (6), qu'on remplit du fluide réfrigérant directement avant ou au début d'une opération de freinage.

**2.** Frein à disques multiples selon la revendication 1, **caractérisé en ce que** des tuyères de sortie (8) sont formées, qui sont orientées à partir desdites fentes de refroidissement (6) vers la périphérie extérieure.

**3.** Frein à disques multiples selon la revendication 1 ou 2, **caractérisé en ce que** la coupe transversale desdites tuyères d'écoulement (8) est dimensionnée en fonction d'un nombre de tours défini desdites lamelles de rotor (4) et d'un débit de passage prédéterminé dudit fluide réfrigérant.

**4.** Frein à disques multiples selon une quelconque des revendications précédentes, **caractérisé en ce que** lesdites lamelles de rotor (4) sont faites en un alliage d'aluminium.

**5.** Frein à disques multiples selon une quelconque des revendications précédentes, **caractérisé en ce que** des lanières de frottement (10) desdites lamelles de rotor (4), qui constituent des surfaces de friction, sont recouvertes des revêtements de réduction de l'usure.

**6.** Frein à disques multiples selon une quelconque des revendications précédentes, **caractérisé en ce que** des brides de connexion (9) sont affectées auxdites fentes de refroidissement (6), auxquelles sont raccordées lesdites lanières de frottement (10).

**7.** Frein à disques multiples selon une quelconque des revendications précédentes, **caractérisé en ce que** le frein à disques multiples se trouve en connexion opératoire avec un assistant de freinage.

**8.** Frein à disques multiples selon une quelconque des revendications précédentes, **caractérisé en ce que** ledit fluide réfrigérant est passé par un circuit de refroidissement séparé.

**9.** Frein à disques multiples selon la revendication 8, **caractérisé en ce que** le circuit de refroidissement comprend un échangeur de chaleur (11) du type fluide-air ou fluide-eau.

**10.** Frein à disques multiples selon la revendication 9, **caractérisé en ce que** ledit échangeur de chaleur (11) du type fluide-eau est raccordé au système de refroidissement du moteur.

**11.** Frein à disques multiples selon une quelconque des revendications 8 à 10, **caractérisé en ce que** ledit circuit de refroidissement comprend une pompe réglable (13).

**12.** Frein à disques multiples selon une quelconque des revendications 8 à 11, **caractérisé en ce que** ledit circuit de refroidissement comprend un filtre des particules (15).

**13.** Frein à disques multiples selon une quelconque des revendications 8 à 12, **caractérisé en ce que** des circuits de soupapes sont intégrés pour le réglage du débit volumétrique dudit circuit de refroidissement.

**14.** Frein à disques multiples selon une quelconque des revendications 8 à 13, **caractérisé en ce que** ledit circuit de refroidissement comprend un système à circuit thermostatique (16).

Fig. 1

Fig. 2

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0308048 A1
- EP 0307079 A1